# EUROPÄISCHE PATENTSCHRIFT

(11) **EP 1 327 331 B1**
(45) Veröffentlichungstag und Bekanntmachung des Hinweises auf die Patenterteilung: **23.03.2005**
(21) Anmeldenummer: 01985312.6
(22) Anmeldetag: 25.09.2001
(51) Int. Cl.: H04L 12/46, H04L 12/58, H04L 12/66, H04Q 7/22, H04Q 7/24, H04L 29/06

(54) **VERFAHREN UND SYSTEM ZUM INFORMATIONSAUSTAUSCH ZWISCHEN KOMMUNIKATIONSNETZEN**
METHOD AND SYSTEM FOR EXCHANGING INFORMATION BETWEEN COMMUNICATION NETWORKS
PROCEDE ET SYSTEME PERMETTANT L'ECHANGE D'INFORMATIONS ENTRE DES RESEAUX DE COMMUNICATION

(30) Priorität: 25.09.2000 DE 20016625 U
(43) Veröffentlichungstag der Anmeldung: 16.07.2003
(73) Patentinhaber: Niklasson, Sven, 25870 Norderfriedrichskoog (DE)
(72) Erfinder: Niklasson, Sven, 25870 Norderfriedrichskoog (DE)
(74) Vertreter: Heun, Thomas, Dipl.-Ing.
(86) Internationale Anmeldenummer: PCT/EP2001/011088
(87) Internationale Veröffentlichungsnummer: WO 2002/025875

(56) Entgegenhaltungen:
- EP-A- 0 821 507
- WO-A-00/07403
- WO-A-98/19438
- WO-A-98/47270
- WO-A-99/14910
- DE-U- 29 511 856
- US-A- 5 873 030
- BRASCHE G ET AL: "CONCEPTS, SERVICES, AND PROTOCOLS OF THE NEW GSM PHASE 2+ GENERAL PACKET RADIO SERVICE" IEEE COMMUNICATIONS MAGAZINE, IEEE SERVICE CENTER. PISCATAWAY, N.J, US, Bd. 35, Nr. 8, 1. August 1997 (1997-08-01), Seiten 94-104, XP000704443 ISSN: 0163-6804
- WU C-S ET AL: "INTERNET ACCESS FOR PERSONAL MOBILE EQUIPMENTS IN A WIRELESS WAN ENVIRONMENT" IEEE TRANSACTIONS ON CONSUMER ELECTRONICS, IEEE INC. NEW YORK, US, Bd. 43, Nr. 3, 1. August 1997 (1997-08-01), Seiten 873-878, XP000742574 ISSN: 0098-3063

## Beschreibung

Die Erfindung betrifft ein Verfahren und ein System zum Informations- und Datenaustausch zwischen Kommunikationsnetzen wie zum Beispiel Mobiltelefon-Kommunikationsnetzen, Telefon-Festnetzen, dem Internet, reinen Datennetzen oder anderen Netzen für sprachgebundene und / oder sprachungebundene Dienste.

Die zunehmende Integration dieser Netze sowie der verschiedenen, über diese Netze angebotenen Dienste erfordert eine möglichst reibungslose, schnelle und sichere Kommunikation auch zwischen diesen Netzen. Ein Problem stellt in diesem Zusammenhang die Tatsache dar, dass diese Netze im allgemeinen nach unterschiedlichen Standards betrieben werden. Dies betrifft nicht nur die Datenprotokolle, sondern auch die Art der Adressierung des Empfängers, die Art der Abrechnung der durch einen Benutzer in Anspruch genommenen Dienste, die Art und das Format der Daten sowie gegebenenfalls weitere spezifische Parameter, die in einem bestimmten Netz verwendet werden, in anderen Netzen jedoch Störungen verursachen oder nicht interpretiert werden können.

Da eine Standardisierung dieser Netze auf Grund ihrer unterschiedlichen Historie sowie der sehr unterschiedlichen Anforderungen im Hinblick auf ihre Bandbreite, Geschwindigkeit, Übertragungsarten usw. kaum in Frage kommt, wird nach anderen Möglichkeiten gesucht, mit denen ein Informationsaustausch erleichtert oder überhaupt erst ermöglicht wird.

Aus der DE 295 11 856 ist zum Beispiel eine Anordnung bekannt, mit der ein Austausch von Kurzmitteilungen (SMS-Meldungen) zwischen verschiedenen Mobilkommunikationsnetzen ermöglicht werden soll. Zu diesem Zweck ist jedem Netz eine Einrichtung zugeordnet, die diese Kurzmitteilungen aus dem betreffenden Netz empfängt, speichert, in ein Austauschformat umsetzt und dann einer zentralen Vermittlungseinrichtung zuführt, die diese dann der Einrichtung eines Ziel-Kommunikationsnetzes zuleitet. Dort wird die Mitteilung empfangen, in das Format des zugeordneten Netzes umgesetzt und in dieses Netz eingespeist. Aus der WO 98/47270 ist ein Verfahren zur Konvertierung von SMS-Nachrichten in das Internet-HTML-Format bekannt.

Ein Nachteil einer solchen monolithischen und zentral organisierten Anordnung besteht jedoch darin, dass insbesondere für große Übertragungsraten die Vermittlungseinrichtung sehr komplex und aufwendig wird und mit sinnvollem Aufwand eine Prüfung oder Bearbeitung der einzelnen ausgetauschten Informationen zum Beispiel zu Zwecken der Abrechnung kaum möglich ist. Ein weiterer Nachteil besteht darin, dass bei einem Fehler in der zentralen Vermittlungseinrichtung die Verbindung zwischen den Netzen vollständig zusammenbrechen kann.

Weiterhin ist aus der DE 195 39 406 ein Verfahren zum Weiterleiten von sprachungebundenen Informationen in Form von mit einer Kennung versehenen Datenpaketen von einem Mobilkommunikationsnetz zu einem anderen Kommunikationsnetz bekannt. Zwischen diesen Netzen befindet sich eine zentrale Einrichtung zum Weiterleiten der Informationen, die über eine Anzahl von logischen Übertragungskanälen mit dem Quellen-Mobilkommunikationsnetz sowie über jeweils einen physischen Übertragungskanal mit mehreren Ziel-Kommunikationsnetzen verbunden ist. Jedem logischen Übertragungskanal ist ein Dienst zugeordnet, zu dessen Betrieb ein Dienstezentrum vorgesehen ist, das sich in einem der Ziel-Kommunikationsnetze befindet. Durch die Zuordnung jeweils einer Kennung zu einem logischen Übertragungskanal auf seiten des Mobilkommunikationsnetzes und die feste Verbindung eines solchen Kanals mit einem zu einem anderen Ziel-Netz führenden logischen Übertragungskanal innerhalb des betreffenden physischen Übertragungskanals soll unabhängig von einer netzspezifischen Empfängeradresse jedes Datenpaket dem gewünschten Ziel-Netz zugeleitet werden. Die zentrale Einrichtung hat jedoch die gleichen Nachteile, wie sie im Zusammenhang mit der oben erwähnten Vermittlungseinrichtung auftreten.

Schließlich wird in der WO 95/33309 ein skalierbares Multimedia-Netzwerk beschrieben, das auf einer verteilten Struktur mit verschiedenen hierarchischen Busebenen basiert, die es den Anbietern von Multimediadiensten ermöglichen soll, auf ökonomische Weise auch eine geringe Anzahl von Nutzern zu versorgen und die Kapazität mit steigender Nutzerzahl stufenweise auszubauen.

Der Erfindung liegt deshalb die Aufgabe zugrunde, ein Verfahren und ein System zum Informations- und Datenaustausch zwischen Kommunikationsnetzen der eingangs genannten Art zu schaffen, mit dem es möglich ist, auf relativ einfache und zuverlässige Weise große Informationsmengen auch unterschiedlicher Art zwischen einer Mehrzahl von unterschiedlich strukturierten Netzen zu übertragen.

Gelöst wird diese Aufgabe mit einem Verfahren, das sich gemäß Anspruch 1 durch folgende Schritte auszeichnet: Empfangen von Informationen (Daten) von mindestens einem Quellen-Kommunikationsnetz sowie Konvertieren der Informationen in ein systeminternes Datenformat; Vermitteln der konvertierten Informationen zu einer bestimmten Dienstebearbeitungseinheit und Bearbeiten der Informationen in einer vorbestimmten Weise; Konvertieren der bearbeiteten Informationen in ein Format eines Ziel-Kommunikationsnetzes sowie Vermitteln und Übersenden der Informationen zu dem Ziel-Kommunikationsnetz.

Die Aufgabe wird mit einem System gelöst, das sich gemäß Anspruch 3 durch folgende Merkmale auszeichnet: mindestens eine Datenübertragungseinheit zum Empfangen von Informationen (Daten) von einem Quellen-Kommunikationsnetz sowie zum Konvertieren der Informationen in ein systeminternes Datenformat; mindestens eine erste Vermittlungseinheit zum Übertragen der von einer Datenübertragungseinheit empfangenen Informationen zu einer vorbestimmten Dienstebearbeitungseinheit; sowie mindestens eine zweite Vermittlungseinheit zum Übertragen der von einer der Dienstebearbeitungseinheiten empfangenen Informationen zu einer vorbestimmten Datenübertragungseinheit zum Konvertieren der Informationen in ein Format des Ziel-Kommunikationsnetzes und zum Senden der Informationen zu dem Ziel-Kommunikationsnetz.

Ein besonderer Vorteil dieser Lösung besteht darin, dass das System aufgrund seines modularen Aufbaus skalierbar ist, das heißt entsprechend der auszutauschenden Informationsmenge (Datenvolumen) schrittweise ausgebaut werden kann, indem weitere Datenübertragungseinheiten und / oder erste bzw. zweite Vermittlungseinheiten und / oder Dienstebearbeitungseinheiten hinzugefügt werden.

Wenn jeweils mindestens zwei der genannten Einheiten vorhanden sind, besteht die Möglichkeit, dass bei einem Ausfall einer der Einheiten deren Funktion durch die andere(n) Einheit(en) gleicher Art übernommen und dadurch ein Totalausfall des Systems vermieden wird.

Die Unteransprüche haben vorteilhafte Weiterbildungen der Erfindung zum Inhalt.

Der modulare Aufbau des Systems ermöglicht gemäß Anspruch 4 auch eine dezentrale Anordnung der Einheiten an geographisch verschiedenen Orten, so dass zum Beispiel bei regionalen Naturkatastrophen oder einem Stromausfall an einem Ort nicht zwangsläufig das gesamte System ausfällt und damit der Informationsaustausch zwischen den Netzen unterbrochen wird.

Weitere Einzelheiten, Merkmale und Vorteile der Erfindung ergeben sich aus der folgenden Beschreibung einer bevorzugten Ausführtungsform anhand der Zeichnung. Es zeigt:
Fig. 1 eine Prinzipdarstellung einer solchen Ausführungsform in Verbindung mit mehreren Netzen;
Fig. 2 ein Flussdiagramm eines ersten Beispiels für einen Prozess- und Datenfluss;
Fig. 3 ein Flussdiagramm eines zweiten Beispiels für einen Prozess- und Datenfluss; und
Fig. 4a, 4b Flussdiagramme des Funktionsablaufes in einer Datenübertragungseinheit.

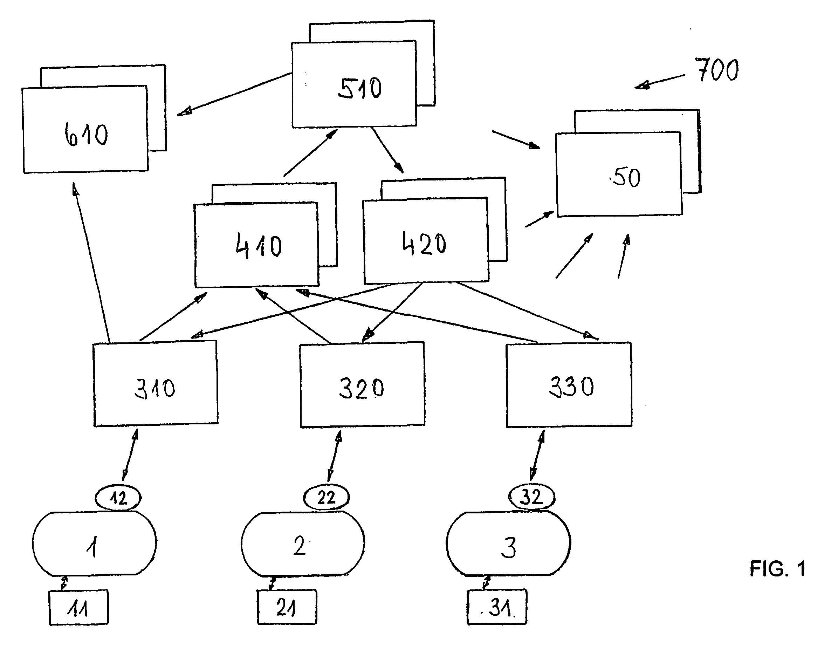

Das erfindungsgemäße System 700 ist gemäß Figur 1 mit einer Mehrzahl von Kommunikationsnetzen 1, 2, 3 verbunden. Beispielhaft sei angenommen, dass das erste Kommunikationsnetz 1 ein Mobilfunknetz, das zweite Kommunikationsnetz 2 ein Festnetz für Telefon- und Fax-Übermittlungen und das dritte Kommunikationsnetz 3 das Internet ist. Darüberhinaus können noch weitere und andere Netze zum jeweiligen Austausch von beliebigen sprachgebundenen oder sprachungebundenen Informationen vorgesehen sein, die ebenfalls mit dem System 700 verbunden sind.

Zu den sprachungebundenen Informationen gehören dabei neben E-mails zum Beispiel schriftliche Textmitteilungen des in der GSM-Spezifikation implementierten Kurzmitteilungsdienstes, der auch als SMS (short message service) Dienst bezeichnet wird, für den ein zum Teil standardisierter und zum Teil nicht standardisierter, das heißt in jedem Mobilfünknetz unterschiedlicher Zeichenvorrat vorgehalten wird.

Jedem Kommunikationsnetz gehört jeweils eine Mehrzahl von Teilnehmern 11, 21 bzw. 31 an, die innerhalb ihres Netzes 1, 2 bzw. 3 jeweils in bekannter Weise miteinander kommunizieren.

Die Kommunikation und der Informationsaustausch zwischen Teilnehmern 11, 21, 31 aus verschiedenen Kommunikationsnetzen 1, 2, 3 erfolgt über das System 700. Jedes Kommunikationsnetz 1, 2, 3 ist zu diesem Zweck über jeweils eine Einrichtung 12, 22, 32 (Kommunikationskanal) mit dem System 700 verbunden, die zum Aufnehmen, Speichern und Weiterleiten von Informationen zwischen dem betreffenden Kommunikationsnetz und dem System 700 in beiden Richtungen (bidirektional) dient.

Die Kommunikation zwischen den Einrichtungen 12, 22, 32 einerseits und dem System 700 andererseits erfolgt mit einem im wesentlichen von dem betreffenden Komunikationsnetz 1, 2, 3 bestimmten Daten-Austauschformat über einen paketvermittelten Datendienst. Dazu dienen Verbindungen wie zum Beispiel native X.25 Netze, Datex-P Verbindungen, Standleitungen oder das Internet mit den bekannten Übertragungsprotokollen wie TCP/IP oder Frame Relay.

Das System eignet sich somit insbesondere zur Verbindung einer großen Anzahl von verschieden konfigurierten Kommunikationsnetzen 1, 2, 3, ohne dass dadurch ein Leistungsabfall bezüglich des Durchsatzes der zu vermittelnden Informationen in Kauf genommen werden muss:

Das System 700 ist durch eine Mehrzahl von Funktionseinheiten 3xx, 4xx, 5xx, 6xx gebildet, die modular und dezentral organisiert und angeordnet sind und jeweils nur eine bestimmte Funktion erfüllen. Die Kommunikation dieser Funktionseinheiten miteinander und somit die Übertragung der zwischen den Netzen 1, 2, 3 zu vermittelnden Informationen erfolgt über ein systeminternes (weiter unten noch genauer erläutertes) Datenformat, das optional native, optional optimierte, paketorientierte Verbindungsprotokolle umfasst.

Diese Architektur bietet außerdem den Vorteil, dass das System skalierbar ist, das heißt dass jede Funktionseinheit 3xx, 4xx, 5xx, 6xx in Abhängigkeit von der geforderten Leistung, dem zu übertragenden Datenvolumen und / oder einer gewünschten Redundanz mehrfach vorgesehen sein kann und es dadurch möglich ist, das System an die aktuellen Erfordernisse anzupassen.

Die Funktionseinheiten 3xx, 4xx, 5xx, 6xx können sich auch an geographisch verschiedenen Orten befinden. Dies hat den Vorteil, dass der Betrieb des Systems weitgehend unabhängig von örtlichen Störungen und äußeren Einflüssen ist, die zum Beispiel in Form von Stromausfällen, Datenleitungsausfällen sowie Zerstörungen durch Feuer, Wasser, Sturm usw. auftreten können. Die Kommunikation der Funktionseinheiten miteinander erfolgt auch dabei über das systeminterne Datenformat, wobei die gleichen Verbindungen genutzt werden können, wie sie oben für die Kommunikation zwischen den Einrichtungen 12, 22, 32 einerseits und dem System 700 andererseits beschrieben sind.

Im einzelnen umfasst das System 700 eine Anzahl von Datenübertragungseinheiten (Leitungseinheiten) 310, 320, 330, die als eine Seite einer uni- oder bidirektionalen, Protokoll-basierenden Punkt-zu-Punkt Verbindung mit einer integrierten Protokoll-Konvertierungseigenschaft ausgebildet sind und vorzugsweise die Erzeugung von Transaktionsrekorden ermöglichen.

Die andere Seite stellen dabei die Kommunikationsnetze 1, 2, 3 dar, wobei die Datenübertragungseinheiten 310, 320, 330 über jeweils eine der Einrichtungen 12, 22, 32 zum Aufnehmen, Speichern und Weiterleiten von Informationen mit jeweils einem der Kommunikationsnetze 1, 2, 3 verbunden sind.

Weiterhin ist mindestens eine erste Vermittlungseinheit (Router) 410 vorgesehen, die zur Verbindung der Datenübertragungseinheiten 310, 320, 330 mit mindestens einer Dienstebearbeitungseinheit 510 dient. Zur Verbindung dieser Dienstebearbeitungseinheit 510 in umgekehrter Richtung mit den Datenübertragungseinheiten 310, 320, 330 weist das System 700 weiterhin mindestens eine zweite Vermittlungseinheit (Router) 420 auf.

Die Dienstebearbeitungseinheiten 510 beinhalten jeweils verschiedene, vom Systembetreiber gewählte Dienste, die in Form von Softwaremodulen realisiert sind. Die Dienste können jeweils mit unterschiedlichen Dateninhalten korrespondieren, die über die verschiedenen Kommunikationsnetze 1, 2, 3 zugeführt und nach Bearbeitung wieder an diese übertragen werden. Beispiele für solche Dienste sind der Empfang, die vorgebbare Bearbeitung und die Weiterleitung von Kurzmitteilungen (SMS), E-mails und Faxen, Online-Banking (z. B. Kontostandabfragen), Spiele, Börseninformationen, Datenbankabfragen (Fahrplanauskünfte) usw..

Das System 700 umfasst schließlich auch mindestens eine Abrechnungseinheit 610, die sowohl mit den Datenübertragungseinheiten 310, 320, 330, als auch mit der mindestens einen Dienstebearbeitungseinheit 510 kommuniziert.

An Hand eines Beispiels soll nun die Funktion des Systems 700 erläutert werden. Zu diesem Zweck sei angenommen, dass von einem Teilnehmer 11 eines ersten (Quellen-) Kommunikationsnetzes 1 eine Information (Nachricht) zu einem Teilnehmer 21 eines zweiten (Ziel-) Kommunikationsnetzes 2 zu übertragen ist.

Die Information des Teilnehmers 11 wird innerhalb des ersten Kommunikationsnetzes 1 mit den in diesen Netzen verwendeten Datenformaten und Datenprotokollen der diesem Netz zugeordneten Einrichtung 12 zugeführt. In dieser Einrichtung wird die Information zwischengespeichert, gegebenenfalls in ein Austauschformat umgewandelt und zu der zugeordneten Datenübertragungseinheit 310 des Systems 700 gesendet.

Die Datenübertragungseinheit 310 empfängt die Information, prüft diese im Hinblick auf eventuelle Übertragungsfehler und erzeugt bei einem fehlerfreien Empfang der Information einen ersten Transaktionsrekord mit dem Inhalt "Information A von Absender-Nummer 11 an Empfänger-Nummer 21 zur Uhrzeit T mit der Identifikation C eingehend erhalten". Dieser erste Transaktionsrekord wird zu Abrechnungszwecken der mindestens einen Abrechnungseinheit 610 zugeführt. Außerdem wird die Nachricht durch die Datenübertragungseinheit 310 in das systeminterne Datenformat des Systems 700 umgewandelt bzw. entsprechend formatiert und dann zu der ersten Vermittlungseinheit 410 übertragen.

In der ersten Vermittlungseinheit 410 ist eine erste Vermittlungstabelle gespeichert, mit der jedem Quellen-Kommunikationsnetz 1, 2, 3 eine der Dienstebearbeitungseinheiten 510 zugeordnet wird. Diese Zuordnung wird in Abhängigkeit von Informationen, Bedingungen oder anderen Parametern, die der Systembetreiber vorgeben kann, vorgenommen. Zu diesen Parametern gehören zum Beispiel systeminterne Zustände wie eine bestimmte Auslastung des Systems und / oder eine Absender- und / oder Zielnummer und / oder eine Absendezeit der zu übermittelnden Informationen.

Die erste Vermittlungseinheit 410 überträgt nach Abfrage der ersten Vermittlungstabelle die von der Datenübertragungseinheit 310 erhaltenen Informationen an die in der Tabelle genannte Dienstebearbeitungseinheit 510 weiter. Dies wird in entsprechender Weise auch mit den von den anderen Datenübertragungseinheiten 320, 330 erhaltenen Informationen durchgeführt.

In der ausgewählten Dienstebearbeitungseinheit 510 wird die Information bearbeitet und zum Beispiel geprüft, ob der absendende Teilnehmer 11 registriert ist und ihm die entsprechenden Gebühren in Rechnung gestellt werden können. Wenn diese Prüfung positiv abgeschlossen werden kann, erzeugt die Bearbeitungseinheit 510 einen zweiten Transaktionsrekord mit dem Inhalt "Absender-Nummer 11 hat Dienst D um Uhrzeit T eindeutig erkennbar durch die Identifikation C in Anspruch genommen" und sendet diesen zu der Abrechnungseinheit 610. Als Identifikation C wird dabei die durch die betreffende Datenübertragungseinheit 310 mit dem ersten Transaktionsrekord erzeugte Identifikation verwendet. Außerdem überträgt die Dienstebearbeitungseinheit 510 die Information zu einer der zweiten Vermittlungseinheiten 420.

In den zweiten Vermittlungseinheiten 420 ist jeweils eine zweite Vermittlungstabelle gespeichert, in der für jede Empfänger-Nummer 11, 21, 31 die zur Zeit zugeordnete Datenübertragungseinheit 310, 320, 330 des Ziel-Kommunikationsnetzes 1, 2, 3 gespeichert ist, zu dem der betreffende Empfänger gehört.

Nach Empfang der Information von der Dienstebearbeitungseinheit 510 wird folglich die Vermittlungstabelle mit der Empfänger-Nummer 21 abgefragt und anschließend die Information an die dort angegebene Datenübertragungseinheit 320 des Ziel-Kommunikationsnetzes 2 weitergeleitet.

Die Datenübertragungseinheit 320 konvertiert die von der zweiten Vermittlungseinheit 420 empfangene Information aus dem systeminternen Datenformat in das Format des Ziel-Kommunikationsnetzes 2 um und überträgt die Information dann zu der diesem Netz zugeordneten Einrichtung 22. Von dort wird die Information schließlich über das Netz 2 dem Empfänger 21 zugeleitet.

Gleichzeitig erzeugt die Datenübertragungseinheit 320 nach dem fehlerfreien Senden der Information einen dritten Transaktionsrekord mit dem Inhalt "Information A von Absender-Nummer 11 an Empfänger-Nummer 21 um Uhrzeit T mit der Identifikation C ausgehend übertragen". Dieser dritte Transaktionsrekord wird wiederum der Abrechnungseinheit 610 zugeführt.

Mit der mindestens einen Abrechnungseinheit 610 wird dann anhand der drei Transaktionsrekorde eine entsprechende Gebührenberechnung vorgenommen, das heisst eine Gebühreneinheit erstellt und dem Absender oder dem Empfänger oder einem anderen Kostenträger der Übertragung zu Abrechnungszwecken zugeordnet. Zu diesem Zweck sind in der Abrechnungseinheit 610 Daten mit verschiedenen Gebühreninformationen wie zum Beispiel Tarifen usw. gespeichert, die auch selektiv, d.h. bestimmten Absendern oder Empfängern oder anderen Kostenträgem individuell zugeordnet werden können.

Im folgenden sollen zur Verdeutlichung der Funktionsabläufe zunächst zwei Beispiele für mögliche Prozess- und Datenflüsse beschrieben werden. Anschließend wird beispielhafte eine der Datenübertragungseinheiten 310, 320, 330 (Leitungsmodul) sowie eine der Vermittlungseinheiten 410, 420 noch genauer erläutert.

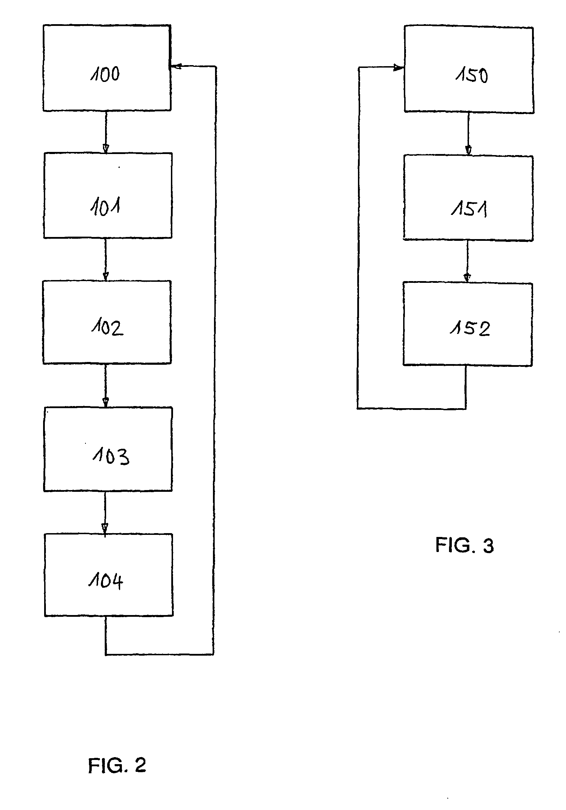

Figur 2 zeigt das erste Beispiel für einen solchen Ablauf. In einem ersten Schritt 100 wird ein Datensatz protokolltypisch von einem der Kommunikationsnetze 1, 2, 3 gemäß obiger Beschreibung durch eine der Datenübertragungseinheiten 310, 320, 330, die sich an unterschiedlichen geografischen Standorten befinden können, von dem System 700 empfangen. Zunächst wird in der betreffenden Datenübertragungseinheiten 310, 320, 330 geprüft, ob der Datensatz entsprechend dem Protokoll fehlerfrei ist. Wenn dies der Fall ist, wird der Datensatz in das systeminterne Datenformat umgewandelt und gespeichert.

Zu diesem Zweck sind mehrere mögliche Speicherorte (Speichereinrichtungen an unterschiedlichen geographischen Orten) vorgesehen, die in einer Parameterdatei gespeichert sind und in Abhängigkeit von der momentanen Auslastung und Verfügbarkeit der Systemeinheiten gewählt werden. Erst dann wird der Empfang des Datensatzes dem Absender durch Übermittlung einer entsprechenden Nachricht quittiert. Diese Reihenfolge hat den Vorteil, dass auch bei einem Systemabsturz im allgemeinen keine Datensätze verloren gehen, da diese an den Speicherorten des System magnetisch gespeichert sind. Anschließend wird (beispielsweise zu Abrechnungszwecken) ein erster Transaktionsrekord erzeugt und an einem der Parameterdatei zu entnehmenden Speicherort (im allgemeinen eine der Abrechnungseinheiten 610) gespeichert.

In einem zweiten Schritt 101 wird der in dem systemintemen Datenformat vorliegende Datensatz dann aus dem Speicherort in eine der ersten Vermittlungseinheiten 410 eingelesen. Mit der Vermittlungseinheit 410 wird das gewünschte Ziel für den Datensatz, d.h. die betreffende Dienstebearbeitungseinheit 510 ermittelt. Zu diesem Zweck dienen eine in der Parameterdatei vorhandene Tabelle mit Zielinformationen, sowie die in dem eingelesenen Datensatz enthaltenen Informationen wie zum Beispiel Absender, Empfänger, der Dateninhalt, Empfangskanalinformationen usw.. Nach Ermittlung der zuständigen Dienstebearbeitungseinheit 510 wird der Datensatz an diese weitergeleitet. Nicht vermittelbare Datensätze werden in einem Fehler-Speicher gespeichert und können durch den Systemverwalter in gewünschter Weise weiter bearbeitet werden.

In einem dritten Schritt 102 wird der Datensatz in die ermittelte Dienstebearbeitungseinheit 510 eingelesen und dort entsprechend der oben genannten Art des enthaltenen Softwaremoduls bearbeitet. Gleichzeitig wird ein zweiter Transaktionsrekord erstellt, der zu Abrechnungszwecken an einem der Parameterdatei zu entnehmenden Speicherort (im allgemeinen wiederum eine der Abrechungseinheiten 610) gespeichert wird. Der bearbeitete Datensatz wird anschließend in dem systeminternen Datenformat gespeichert, wobei mögliche Speicherorte wiederum der Parameterdatei entnommen werden können. Weiterhin wird ein dritter Transaktionsrekord erzeugt und wiederum wie oben gespeichert.

In einem vierten Schritt 103 wird der bearbeitete Datensatz dann aus dem Speicherort in eine der zweiten Vermittlungseinheiten 420 eingelesen und unter Berücksichtigung der momentanen Auslastung und Verfügbarkeit der Systemeinheiten zu einem gewünschten Ziel-Kommunikationsnetz 1, 2, 3 und somit zunächst zu der betreffenden Datenübertragungseinheit 310, 320, 330 übertragen. Grundlage für diese Übertragung ist eine Tabelle mit Zielinformationen, die der Parameterdatei entnommen werden können, sowie die in dem eingelesenen Datensatz enthaltenen Informationen.

In einem fünften Schritt 104 wird schließlich der von der zweiten Vermittlungseinheit 420 übertragene Datensatz in die ermittelte Datenübertragungseinheit 310, 320, 330 eingelesen, aus dem systeminternen Datenformat in das Datenformat des Ziel-Kommunikationsnetzes 1, 2, 3 umgewandelt und an dieses Netz übermittelt. Nach dem Eingang einer durch den betreffenden Empfänger 11, 21, 31 übermittelten Empfangsbestätigung (Quittung) wird der Datensatz in der Datenübertragungseinheit gelöscht und dann ein vierter Transaktionsrekord erstellt und wie oben gespeichert, wobei die möglichen Speicherorte wiederum der Parameterdatei zu entnehmen sind. Ein Vorteil dieser Reihenfolge besteht darin, dass die Erzeugung von Doppelabrechnungs-Datensätze verhindert wird. Anschließend kann der Ablauf mit dem ersten Schritt 100 beginnend wiederholt werden.

Für ein zweites Beispiel sei davon ausgegangen, dass in einer Dienstebearbeitungseinheit 510 ein Softwaremodul implementiert ist, mit dem Datensätze in Abhängigkeit von einem äußeren Ereignis asynchron erzeugt werden können. Ein solches Softwaremodul kann zum Beispiel zur Übertragung von Börsendaten dienen, während das äußere Ereignis zum Beispiel das Überschreiten eines Limitkurses ist. In diesem Fall wird durch die Dienstebearbeitungseinheit 510 gemäß Figur 3 in einem ersten Schritt 150 ein für den betreffenden Anwender vorgesehener Datensatz erzeugt und in dem systemintemen Datenformat gespeichert. Weiterhin wird wiederum ein erster Transaktionsrekord erzeugt und wie oben gespeichert, wobei die möglichen Speicherorte für den Datensatz und den Transaktionsrekord wieder einer Parameterdatei entnommen werden können.

In einem zweiten Schritt 151 wird der Datensatz dann aus dem Speicherort in eine der zweiten Vermittlungseinheiten 420 übertragen und in diese eingelesen. Anhand einer in der Parameterdatei gespeicherten Tabelle mit Zielinformationen sowie der in dem eingelesenen Datensatz enthaltenen Informationen wird dann das gewünschte Ziel, d. h. die betreffende Datenübertragungseinheit 310, 320, 330 ermittelt und der Datensatz dorthin übertragen.

In einem dritten Schritt 152 liest die ermittelte Datenübertragungseinheit 310, 320, 330 den Datensatz ein, wandelt diesen von dem systemintemen Datenformat ist das Datenformat des Ziel-Kommunikationsnetzes 1, 2, 3 um und übermittelt diesen an das Ziel-Kommunikationsnetz. Nach dem Eingang einer von dem Ziel-Netz übertragenen Empfangsbestätigung (Quittung des Empfängers) wird der Datensatz in der Datenübertragungseinheit gelöscht und dann ein zweiter Transaktionsrekord erstellt und wie oben gespeichert, wobei die möglichen Speicherorte wiederum der Parameterdatei zu entnehmen sind. Ein Vorteil dieser Reihenfolge besteht auch hierbei darin, dass die Erzeugung von Doppelabrechnungs-Datensätze verhindert wird. Anschließend kann der Ablauf mit dem ersten Schritt 150 beginnend wiederholt werden.

In allen Fällen gilt, dass für alle Transaktionsrekorde zwei Speicherorte (Abrechnungseinheiten 610) zur gleichzeitigen Speicherung vorgesehen sein können, die zum Beispiel physisch und geographisch voneinander getrennt sind. Diese redundante Speicherung ist durch die Vergabe von eindeutigen Identifizierungs-Nummern möglich, mit denen eine Doppelverarbeitung verhindert wird.

Weiterhin gilt, dass die verschiedenen, in den beiden Beispielen beschriebenen Schritte (Funktionsabschnitte) jeweils an geographisch unterschiedlichen Orten ausgeführt werden können. Die Verbindung zwischen den für die Ausführung der Schritte jeweils erforderlichen Einheiten 3xx, 4xx, 5xx, 6xx erfolgt entweder über systeminterne oder andere, allgemein zur Verfügung stehende Kommunikationsverbindungen.

Wenn darüberhinaus diese Einheiten redundant ausgeführt werden, ergibt sich der Vorteil, dass bei einem Ausfall einzelner oder aller Einheiten an einem geografischen Ort das System unterbrechungsfrei mit den Einheiten an anderen Orten weiter betrieben werden kann.

Wie bereits erwähnt wurde, kann durch den Parallelbetrieb von mehreren gleichen Einheiten die Verarbeitungskapazität des Systems erhöht und somit in einfacher Weise an den Bedarf angepasst (skaliert) werden.

Die Übermittlung von Informationen bzw. Datensätzen zwischen unterschiedlichen Kommunikationsnetzen 1, 2, 3 wird einerseits durch die in den Datenübertragungseinheiten 310, 320, 330 erfolgende Protokollkonvertierung sowie andererseits durch die Verwendung des systeminternen einheitlichen Datenformates gewährleistet.

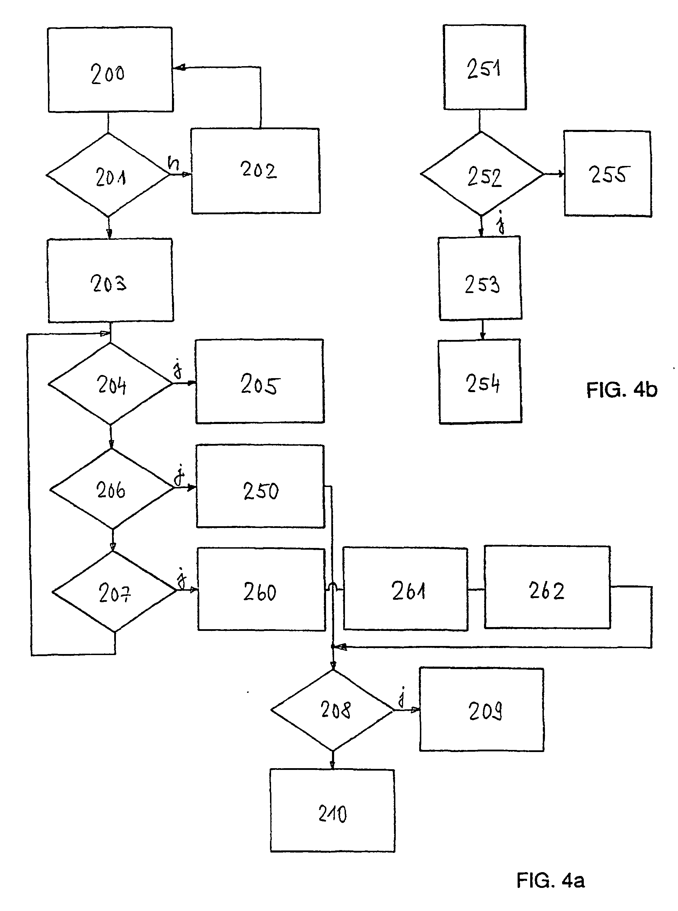

Zur Realisierung der oben beschriebenen Funktionsweise sind in den Datenübertragungseinheiten 310, 320, 330 (Leitungsmodulen) Programme implementiert, die vorzugsweise mehrfach gestartet werden können. Um ein gestartetes Programm ("Instanz") zum Beispiel im Hinblick auf bestimmte Leitungswege, Definitionen usw. zu individualisieren, wird gemäss Figur 4a in einem Schritt 200 eine Parametrisierung auf der Basis eines Parametersatzes durchgeführt, der durch den Namen der Instanz indiziert ist und wodurch die oben genannten Parameterdateien erzeugt werden.

Ein solches gestartetes Programm verbindet gemäss Schritt 200 die Datenübertragungseinheit 310, 320, 330 mit einem durch die Parametrisierung bestimmten Kommunikationskanal 12, 22, 32 eines Kommunikationsnetzes 1, 2, 3. Gemäß Schritt 201 wird dann abgefragt, ob die Verbindung fehlerfrei und protokollgerecht zustande gekommen ist. Wenn dies nicht der Fall ist, wird gemäß Schritt 202 eine Fehlerbehandlung zum Beispiel in Form eines Eintrags in ein Logbuch, eines Alarms an einen Systemverwalter usw. durchgeführt und der Verbindungsversuch mit Schritt 200 wiederholt. Wenn die Verbindung fehlerfrei Zustande gekommen ist, wird gemäß Schritt 203 über das betreffende Kommunikationsnetz 1, 2, 3 die Verbindung zu dem Empfänger oder Adressaten (Gegenstelle) 11, 21, 31 hergestellt.

Anschließend wird mit einem Schritt 204 abgefragt, ob die Leitungsüberwachungszeit abgelaufen ist. Wenn dies der Fall ist, wird gemäß Schritt 205 ein entsprechendes Alarmsignal an die Gegenstelle gesendet. Wenn die Leitungsüberwachungszeit noch nicht abgelaufen ist, wird gemäß Schritt 206 abgefragt, ob ein kompletter Datensatz über den Kommunikationskanal empfangen wurde. Wenn dies der Fall ist, wird der Verfahrensablauf mit einer ersten Routine 250 fortgesetzt. Andernfalls wird gemäß Schritt 207 abgefragt, ob ein Auftrag vorliegt, Datensätze zu versenden. Wenn dies der Fall ist, wird der Verfahrensablauf mit einer zweiten Routine 260 fortgesetzt, andernfalls erfolgt ein Rücksprung zu Schritt 204.

Nach dem Durchlaufen der ersten oder zweiten Routine 250; 260 wird gemäß einem Schritt 208 abgefragt, ob die Überwachungszeit für diese Instanz abgelaufen ist. Wenn dies der Fall ist, wird gemäß Schritt 209 ein entsprechendes Statussignal erzeugt und an einen Überwachungsmonitor 50 ("Watchdog") gesendet. Andernfalls wird gemäß Schritt 210 die noch vorhandene Rechenzeit anderen Prozessen zur Verfügung gestellt.

Ein Flussdiagramm der ersten Routine 250, mit der ein empfangener Datensatz (Datenrahmen) bearbeitet wird, ist in Figur 4b dargestellt. Nach der Prüfung der Daten im Hinblick auf eventuelle Fehler und Plausibilität mit einem Schritt 251 wird zunächst mit einem Schritt 252 geprüft, ob es sich bei den empfangenen Daten um solche handelt, die über das System weiterzuleiten sind (Nutzdaten), oder ob es sich um eine Bestätigung (Quittung) für einen zuvor versendeten Datensatz handelt. Diese Frage kann zum Beispiel anhand des Attributes des Datensatzes entschieden werden.

Wenn es sich bei dem empfangenen Datensatz um Nutzdaten handelt, werden diese gemäß Schritt 253 zunächst gespeichert und in das systeminterne Datenformat umgewandelt. Anschließend wird gemäß Schritt 254 dem Absender des Datensatzes eine Empfangsbestätigung (Quittung) übersandt und ein erster Transaktionsrekord "Daten wurden empfangen" erzeugt, der zu Abrechnungszwecken einer der Abrechnungseinheiten 610 zugeführt wird. Anschließend wird mit Schritt 208 fortgefahren.

Wenn es sich bei den empfangenen Daten um eine Empfangsbestätigung eines Empfängers 11; 21; 31 handelt, wird gemäß Schritt 255 im wesentlichen ein Transaktionsrekord "Daten wurden versendet" erzeugt, der wiederum zu Abrechnungszwecken einer der Abrechnungseinheiten 610 zugeführt wird. Anschließend wird mit Schritt 208 fortgefahren.

Wenn gemäß der zweiten Routine 260 (Figur 4a) der Datensatz zu versenden ist, wird dieser zunächst gemäß Schritt 261 von dem systemintemen Datenformat in das Format des Ziel-Kommunikationsnetzes 1; 2; 3 umgesetzt. Anschließend wird gemäß Schritt 262 der Datensatz.versendet und eine Überwachungseinrichtung gestartet, mit der auf den Eingang einer Empfangsbestätigung des Empfängers 11; 21; 31 gewartet wird, und es wird mit Schritt 208 fortgefahren.

Im folgenden soll nun die grundsätzliche Arbeits- und Funktionsweise der Vermittlungseinheiten 410, 420 beschrieben werden. Dazu seien zunächst einige allgemeine Grundsätze erläutert.

Jedem Kommunikationskanal 12, 22, 32 des erfindungsgemäßen Systems ist ein eindeutiger Name aus fünf Buchstaben oder Ziffern zugeordnet. Weiterhin ist jeder Kommunikationskanal mit einer Vermittlungsstelle innerhalb des ihm zugeordneten Kommunikationsnetzes 1; 2; 3 verbunden.

Jeder in dem System übertragene Datensatz hat ebenfalls einen eindeutigen Namen aus dem Vorrat von Namen, der durch die dezentral in dem System angeordneten und miteinander verbundenen Vermittlungseinheiten 410, 420 zur Verfügung gestellt wird. Der Name eines Datensatzes besteht aus fünf Zeichen, die eindeutig dem Kommunikationskanal 12, 22, 32 zugeordnet sind, der die Transaktion ursächlich veranlasst hat, wie zum Beispiel der Empfangskanal, sowie einer zusätzlichen Zahlen-Zeichenkette, die den Transaktionszeitpunkt (sendend oder empfangend) mit Datum und Uhrzeit auf eine Millisekunde genau angibt. Weiterhin wird eine eindeutige Namenserweiterung verwendet, die den (Nutz-) Datensatz als solchen kenntlich macht und zum Beispiel von Abrechnungs-Datensätzen unterscheidet, die mit einer anderen Namenserweiterung versehen sind.

Auf diese Weise kann aus dem Namen jedes Datensatzes der durch diesen verwendete Kommunikationskanal 12, 22, 32 sowie das externe Kommunikationsnetz 1, 2, 3 einschließlich einer durch diesen eventuell benutzten Vermittlungsstelle in dem Kommunikationsnetz und das Transaktionsdatum und die Transaktions-Uhrzeit abgeleitet werden. Damit ist für jeden Datensatz eine eindeutige Identifizierbarkeit gegeben, so dass große Datenbanken zur Ermittlung dieser Informationen überflüssig sind. Dadurch wird auch eine von dem Inhalt des Datensatzes abhängige Weiterleitung ("Content-Routing incl. Sequenzing") sowie Laufzeitmessungen und eine korrekte Nachverfolgung von Datensätzen allein anhand des Namens des Datensatzes möglich. Auf diese Weise können zum Beispiel Kurzmitteilungszentralen, die in unterschiedlichen GSM-Netzen lokalisiert sind, miteinander verbunden werden.

Schließlich ist damit auch eine in Abhängigkeit von einer momentanen Auslastung einzelner Vermittlungseinheiten 410, 420 intelligente Laststeuerung bzw. Lastverteilung auf andere Vermittlungseinheiten möglich.

Im einzelnen werden die mit einer Vermittlungseinheit 410, 420 verbundenen Datenquellen, bei denen es sich um die Datenübertragungseinheiten 310, 320, 330, sowie die Dienstebearbeitungseinheiten 510 handelt, zyklisch daraufhin abgefragt, ob ein zu übertragender Datensatz vorhanden ist. Diese Abfrage kann entsprechend einer festgelegten Prioritätsreihenfolge erfolgen.

Wenn ein solcher Datensatz gefunden wurde, werden daraus die für die Weiterleitung relevanten Daten extrahiert. Dabei handelt es sich zum Beispiel um die Absendemummer, die Zielnummer, benutzte Kommunikationskanäle, gegebenenfalls Textinhalte, wenn der Datensatz inhaltsabhängig weitergeleitet werden soll, sowie eventuell andere Sonderinformationen. Anhand dieser extrahierten Daten wird dann mit einer Vermittlungstabelle das gewünschte Ziel ermittelt. Weiterhin ist zu prüfen, ob der Datensatz eine Sequenzanforderung enthält, d. h. ob die einzelnen Datenpakete in einer bestimmten Reihenfolge beim Empfänger ankommen müssen. Dies ist zum Beispiel oftmals bei einer inhaltsabhängigen Weiterleitung der Fall. Wenn eine solche Sequenzanforderung vorliegt, wird der Datensatz an einen für diese Zwecke vorbestimmten Kommunikationskanal bzw. eine Kommunikationskanalgruppe weitergeleitet.

Andernfalls wird festgestellt, ob ein in der Vermittlungstabelle angegebener lokaler Weg zu dem Empfänger verfügbar und nicht überlastet ist. Dies wird zum Beispiel anhand einer Auftrags-Warteschlange, einer Auslieferungsschlange sowie durch einen Vergleich mit einer maximal zulässigen Anzahl von Aufträgen ermittelt. In Abhängigkeit von diesem Vergleich wird der Datensatz dann entweder über den lokalen Weg an die Datenübertragungseinheit ausgeliefert, oder es wird festgestellt, ob innerhalb des Systems ein anderer Weg zu dieser Datenübertragungseinheit führt, der verfügbar und (nach Durchführung des genannten Vergleichs) nicht überlastet ist. Wenn auch alle anderen Wege nicht verfügbar oder überlastet sind, wird der Datensatz in einen Pufferbereich übertragen und dort zwischengespeichert, um zu einem späteren Zeitpunkt zu dem Ziel übertragen zu werden. Ein Ziel kann dabei sowohl eines der Kommunikationsnetze 1, 2, 3, als auch ein in der Dienstebearbeitungseinheit 510 bearbeiteter Dienst sein.

Zur Überwachung des Systems 700 sowie zur Gewährleistung einer gleichmäßigen Auslastung bzw. einer optimalen Verarbeitungsgeschwindigkeit sind ein oder mehrere Überwachungsmonitore 50 (Figur 1) vorgesehen, mit denen Statusberichte ausgewertet werden können. Jedes laufende Programm (Instanz), d.h. jede der Einheiten 3xx, 4xx, 5xx, 6xx erzeugt mit bestimmten zeitlichen Abständen, die von dem Systemanwender gewählt werden können, solche Statusberichte, die Angaben über die Leitungsverfügbarkeit, Verkehrsstatistikzahlen und Qualitätsinformationen, wie z. B. die Anzahl von erfolgreichen Weiterleitungen und die Anzahl von negativ quittierten Weiterleitungen, sowie Angaben über momentane Last-Zustände, d. h. die Anzahl der momentan noch in der Warteschlange wartenden Aufträgen enthalten. Die Statusberichte sind als Dateien an vorbestimmten Orten magnetisch gespeichert, so dass die Überwachungsmonitore (oder andere Auswerteprogramme) nur lose an die Vermittlungseinheiten 410, 420 gekoppelt sind und durch deren Betrieb keine Fehler in die anderen Programmabläufe eingeschleust werden können.

Die Überwachungsmonitore 50 greifen auf die gespeicherten Statusberichte asynchron zu und bereiten die enthaltenen Informationen zur Auswertung durch einen Systemverwalter zum Beispiel HTML-basierend grafisch auf oder versenden diese als Kurzmitteilung. Dies hat den Vorteil, dass gleichzeitig mehrere Systemverwalter an verschiedenen Arbeitsplätzen mit unterschiedlichen Betriebssystemen am System arbeiten und dieses überwachen können. Weiterhin kann anhand von Grenzwerten (Limit-Parametern) festgestellt werden, ob das System bzw. einzelne laufende Programme in einen kritischen Zustand geraten und zum Beispiel innerhalb des vorbestimmten Zeitrasters nicht mehr aktiv sind ("Watch Dog"-Verfahren, Totmannschaltung).

Schließlich besteht auch die Möglichkeit einer entfernten Überwachung eines oder mehrerer der Überwachungsmonitore 50 durch eine Supervisor-Software, wenn diese zum Beispiel auf einem physisch und geographisch unabhängigen System (gesonderter Rechner, Notebook) installiert ist, das mit einem Mobiltelefon sowie einer Einrichtung versehen ist, über die selbständig eine Überwachungsperson an einer Gegenstelle in einem Telefonnetz angewählt werden kann. Die Supervisor-Software überprüft dabei in regelmäßigen Zeitabständen die Statusberichte des Überwachungsmonitors 50. Wenn ein solcher Bericht fehlerhaft ist oder zum Beispiel eine Grenzwert-Überschreitung anzeigt, oder innerhalb einer bestimmten Zeit nicht empfangen wird, wird automatisch die Gegenstelle angewählt und eine entsprechende vorbestimmte Meldung an die Überwachungsperson übermittelt.

## Patentansprüche

1. Verfahren zum Informations- und Datenaustausch zwischen einer Mehrzahl von Kommunikationsnetzen, **gekennzeichnet durch** folgende Schritte:
- Empfangen von Informationen von mindestens einem Quellen-Kommunikationsnetz, Konvertieren der Informationen in ein systeminternes Datenformat und Erzeugen und Speichern eines ersten, den Empfang der Informationen beinhaltenden Transaktionsrekords;
- Vermitteln der konvertierten Informationen mittels einer von mindestens zwei verfügbaren ersten Vermittlungseinheiten zu einer bestimmten Dienstebearbeitungseinheit, Bearbeiten der Informationen in einer vorbestimmten Weise und Erzeugen und Speichern eines zweiten, die Inanspruchnahme der Dienstebearbeitungseinheit beinhaltenden Transaktionsrekords;
- Vermitteln der bearbeiteten Informationen mittels einer von mindestens zwei verfügbaren zweiten Vermittlungseinheiten zu einer einem Ziel-Kommunikationsnetz zugeordneten Datenübertragungseinheit, Konvertieren der Informationen in ein Format des Ziel-Kommunikationsnetzes, Übersenden der Informationen zu dem Ziel-Kommunikationsnetz und Erzeugen und Speichern eines dritten, die Übertragung der Informationen zu dem Ziel-Kommunikationsnetz beinhaltenden Transaktionsrekords; und
- Berechnen einer in Rechnung zu stellenden Gebühr anhand der Transaktionsrekorde.

2. Verfahren nach Anspruch 1,
**dadurch gekennzeichnet, dass**
- der erste Transaktionsrekord mindestens eine Angabe über einen Absender, einen Empfänger und eine Identifikation enthält,
- der zweiten Transaktionsrekord mindestens eine Angabe über den Absender, den in Anspruch genommenen Dienst und die Identifikation enthält, und
- der dritte Transaktionsrekord mindestens eine Angabe über den Absender, den Empfänger und die Identifikation enthält.

3. System zum Informations- und Datenaustausch zwischen einer Mehrzahl von Kommunikationsnetzen, **gekennzeichnet durch**:
- mindestens zwei Datenübertragungseinheiten (310, 320, 330) zum Empfangen von Informationen von mindestens einem Quellen-Kommunikationsnetz (1, 2, 3), zum Konvertieren der Informationen in ein systeminternes Datenformat und zum Erzeugen und Speichern eines ersten, den Empfang der Informationen beinhaltenden Transaktionsrekords;
- mindestens zwei Dienstebearbeitungseinheiten (510) zum Bearbeiten der Informationen entsprechend einem gewählten Dienst, sowie zum Erzeugen und Speichern eines zweiten, die Inanspruchnahme der Dienstebearbeitungseinheit beinhaltenden Transaktionsrekords;
- mindestens zwei erste Vermittlungseinheiten (410) zum Übertragen der von einer der Datenübertragungseinheiten (310, 320, 330) empfangenen Informationen zu einer der mindestens zwei Dienstebearbeitungseinheiten (510);
- mindestens zwei zweite Vermittlungseinheiten (420) zum Übertragen der von einer der Dienstebearbeitungseinheiten (510) empfangenen Informationen zu einer der vorbestimmten Datenübertragungseinheiten (310, 320, 330), die zum Konvertieren der Informationen in ein Format des Ziel-Kommumkationsnetzes (1, 2, 3), zum Senden der Informationen zu dem Ziel-Kommunikationsnetz und zum Erzeugen und Speichern eines dritten, die Übertragung der Informationen zu dem Ziel-Kommunikationsnetz beinhaltenden Transaktionsrekords vorgesehen ist;
- mindestens zwei Abrechnungseinheiten (610) zum Erstellen einer Gebühreneinheit anhand der Transaktionsrekorde nach der Übertragung einer Information von einem Quellen-Kommunikationsnetz zu einem Ziel-Kommunikationsnetz und zum Zuordnen der Gebühreneinheit zu einem Absender oder Empfänger oder einem an deren Kostenträger der Übertragung zu Abrechnungszwecken.

4. System nach Anspruch 3,
**dadurch gekennzeichnet, dass** die mindestens zwei Datenübertragungseinheiten (310, 320, 330) als eine Seite einer uni- oder bidirektionalen, Protokoll-basierenden Punkt-zu-Punkt Verbindung mit einer integrierten Protokoll-Konvertierungseigenschaft ausgebildet sind.

5. System nach Anspruch 3,
**dadurch gekennzeichnet, dass** die Einheiten dezentral organisiert und zumindest ein Teil der Einheiten an geographisch verschiedenen Orten angeordnet ist, wobei die Informationen zwischen den Einheiten mit dem systeminternen Datenformat ausgetauscht werden.

6. System nach Anspruch 3,
**dadurch gekennzeichnet, dass** in den mindestens zwei ersten Vermittlungseinheiten (410) eine erste Vermittlungstabelle gespeichert ist, mit der jedem Empfänger eine der Diensiebearbeitungseinheiten (510) zugeordnet wird, wobei diese Zuordnung in Abhängigkeit von Informationen, Bedingungen oder anderen Parametern, die durch einen Systembetreiber vorgebbar sind, erfolgt.

7. System nach Anspruch 3,
**dadurch gekennzeichnet, dass** in den mindestens zwei zweiten Vermittlungseinheiten (420) eine zweite Vermittlungstabelle gespeichert ist, in der für jeden Empfänger die zur Zeit zugeordnete Datenübertragungseinrichtung (310, 320, 330) des Ziel-Kommunikationsnetzes (1, 2, 3) gespeichert ist

8. System nach Anspruch 3,
**gekennzeichnet durch** mindestens eine Einrichtung (12, 22, 32) zum Aufnehmen, Speichern und Weiterleiten von Informationen zwischen einem Kommunikationsnetz und einer zugeordneten Datenübertragungseinheit (310, 320, 330).

9. System nach Anspruch 8,
**dadurch gekennzeichnet, dass** die Einrichtungen (12, 22, 32) zum Aufnehmen, Speichern und Weiterleiten von Informationen mit den Datenübertragungseinheiten (310, 320, 330) über einen paketvermittelten Datendienst verbunden sind.

10. System nach Anspruch 3,
**dadurch gekennzeichnet, dass** die mindestens zwei Dienstebearbeitungseinheiten (510) Softwaremodule beinhalten, mit denen die Dienste wie Bearbeitung und Weiterleitung von Kurzmitteilungen (SMS), E-mails und Faxen, Online-Banking, Spiele, Börseninformationen, Datenbankabfragen realisierbar sind.

## Claims

1. Process for exchanging information and data between a plurality of communication networks, **characterized by** the following steps:
- receiving information from at least one source communication network, converting the information into a system-internal data format, and generating and recording a first transaction record including the receipt of the information;
- switching the converted information by means of one of at least two available first switching units to a specific service processing unit, processing the information in a predetermined manner, and generating and storing a second transaction record including the demand of the service processing unit;
- switching the processed information by means of one of at least two available second switching units to a data transmission unit assigned to a target communication network, converting the information into a format of the target communication network, transmitting the information to the target communication network and generating and storing a third transaction record including the transmission of the information to the target communication network; and
- calculating a fee to be charged on the basis of the transaction records.

2. Process according to claim 1,
**characterized in that**:
- the first transaction record includes at least one indication about a sender, a recipient and an identification,
- the second transaction record includes at least one indication about the sender, the demanded service, and the identification and
- the third transaction record includes at least one indication about the sender, the recipient and the identification.

3. System for exchanging information and data between a plurality of communication networks **characterized by**:
- at least two data transmission units (310, 320, 330) for receiving information from at least one source communication network (1, 2, 3), for converting the information into a system-internal data format, and for generating and storing a first transaction record including the receipt of the information;
- at least two service processing units (510) for processing the information according to a selected service, as well as for generating and storing a second transaction record including the demand of the service processing unit;
- at least two first switching units (410) for transmitting the information received by one of the data transmission units (310, 320, 330) to one of the at least two service processing units (510);
- at least two second switching units (420) for transmitting the information received by said one of the service processing units (510) to one of the predetermined data transmission units (310, 320, 330) which is provided for converting the information into a format of the target communication network (1, 2, 3), for sending the information to the target communication network, and for generating and storing a third transaction record including the transmission of the information to the target communication network;
- at least two accounting units (610) for establishing a fee unit on the basis of the transaction records after the transmission of an information from a source communication network to a target communication network, and for assigning the fee unit to a sender or recipient or any other party accountable for the transmission for the purpose of charging.

4. System according to claim 3,
**characterized in that** the at least two data transmission units (310, 320, 330) are provided as one side of a uni- or bi-directional, protocol based point-to-point connection with an integrated protocol converting characteristic.

5. System according to claim 3,
**characterized in that** the units are organized decentralized and that at least a part of the units is positioned at geographically different locations, wherein the information is exchanged between the units with the system-internal data format.

6. System according to claim 3,
**characterized in that** in the at least two first switching units (410) a first switching table is stored, with which to each recipient is assigned one of the service processing units (510), wherein this allocation is conducted in dependence on information, conditions or other parameters, which can be established by a system administrator.

7. System according to claim 3,
**characterized in that** in the at least two second switching units (420) a second switching table is stored, in which for each recipient the presently assigned data transmission unit (310, 320, 330) of the target communication network (1, 2, 3) is stored.

8. System according to claim 3,
**characterized by** at least one device (12, 22, 32) for receiving, storing and relaying information between a communication network and an assigned data transmission unit (310, 320, 330).

9. System according to claim 8,
**characterized in that** the devices (12, 22, 32) for receiving, storing and relaying information are connected with the data transmission unit (310, 320, 330) via a packet switching data service.

10. System according to claim 3,
**characterized in that** the at least two service processing units (510) include software modules, with which the services like processing and relaying of short messages (SMS), e-mails and faxes, online banking, games, stock market information, and data bank inquiries can be accomplished.

## Revendications

1. Procédé pour échanger des informations et des données entre une pluralité de réseaux de communication, **caractérisé par** les étapes suivantes:
- réception des informations d'au moins un réseau de communication source, conversion des informations dans un format de données interne au système, et génération et mémorisation d'un premier enregistrement de transaction incluant la réception des informations;
- commutation des informations converties au moyen d'une d'au moins deux premières unités de commutation disponibles vers une unité de traitement de service spécifique, traitement des informations de manière prédéterminée, et génération et stockage d'un second enregistrement de transaction incluant l'utilisation de l'unité de traitement de service;
- commutation des informations traitées au moyen d'une d'au moins deux secondes unités de commutation disponibles vers une unité de transmission des données couplée à un réseau de communication cible, conversion des informations dans un format du réseau de communication cible, transmission des informations au réseau de communication cible, et génération et stockage d'un troisième enregistrement de transaction incluant la transmission des informations au réseau de communication cible;
- calcul d'une taxe à payer sur la base des enregistrements de transaction.

2. Procédé selon la revendication 1,
**caractérisé en ce que**:
- le premier enregistrement de transaction inclut au moins une indication sur un expéditeur, un destinataire et une identification;
- le second enregistrement de transaction inclut au moins une indication sur l'expéditeur, le service utilisé et l'identification, et
- le troisième enregistrement de transaction inclut au moins une indication sur l'expéditeur, le destinataire et l'identification.

3. Système pour échanger des informations et des données entre une pluralité de réseaux de communication, **caractérisé par**:
- au moins deux unités de transmission de données (310, 320, 330) pour recevoir des informations venant d'au moins un réseau de communication source (1, 2, 3), pour convertir les informations dans un format de données interne au système, et pour générer et stocker un premier enregistrement de transaction incluant la réception des informations;
- au moins deux unités de traitement de service (510) pour traiter les informations selon le service sélectionné, ainsi que pour générer et stocker un second enregistrement de transaction incluant l'utilisation de l'unité de traitement de service;
- au moins deux premières unités de commutation (410) pour transmettre les informations reçues par l'une des unités de transmission des données (310, 320, 330) à l'un des au moins deux unités de traitement de service (510);
- au moins deux secondes unités de commutation (420) pour transmettre les informations reçues par l'une des unités de traitement de service (510) à l'une des unités de transmission des données prédéterminées (310, 320, 330) qui est prévue pour convertir les informations dans un format du réseau de communication cible (1, 2, 3), pour envoyer les informations au réseau de communication cible, et pour générer et stocker un troisième enregistrement de transaction incluant la transmission des informations au réseau de communication cible;
- au moins deux unités de comptage (610) pour établir une unité de taxes sur la base des enregistrements de transaction après la transmission d'informations à partir d'un réseau de communication source jusqu'à un réseau de communication cible, et pour attribuer l'unité de taxes à un expéditeur ou un destinataire ou toute autre partie responsable de la transmission dans le but du paiement.

4. Système selon la revendication 3,
**caractérisé en ce que** les au moins deux unités de transmission des données (310, 320, 330) se présentent sous la forme d'une face d'une connexion point à point uni- ou bidirectionnelle, basée sur un protocole avec une capacité intégrée de conversion de protocole.

5. Système selon la revendication 3,
**caractérisé en ce que** les unités sont organisées de manière décentralisée et qu'au moins une partie des unités sont positionnées à des localisations géographiques différentes, les informations étant échangées entre les unités avec le format de données interne au système.

6. Système selon la revendication 3,
**caractérisé en ce que** dans les au moins deux premières unités de commutation (410), une première table de commutation est stockée, avec laquelle une des unités de traitement de service (510) est attribuée à chaque destinataire, cette attribution étant conduite en fonction des informations, des conditions ou autres paramètres, qui peuvent être établis par un administrateur du système.

7. Système selon la revendication 3,
**caractérisé en ce que** dans les au moins deux secondes unités de commutation (420), une seconde table de commutation est stockée, dans laquelle pour chaque destinataire, l'unité de transmission des données présentement attribuée (310, 320, 330) du réseau de communication cible (1, 2, 3) est stockée.

8. Système selon la revendication 3,
**caractérisé par** au moins un dispositif (12, 22, 32) pour recevoir, stocker et acheminer des informations entre un réseau de communication et une unité de transmission de données attribuée (310, 320, 330).

9. Système selon la revendication 8,
**caractérisé en ce que** les dispositifs (12, 22, 32) pour recevoir, stocker et acheminer des informations sont reliés à l'unité de transmission de données (310, 320, 330) au moyen d'un service à commutation de paquets.

10. Système selon la revendication 3,
**caractérisé en ce que** les au moins deux unités de traitement de service (510) comprennent des modules de logiciels, avec lesquels des services tels que le traitement ou l'acheminement de messages courts (SMS), courriels et faxes, opérations bancaires en ligne, jeux, informations sur la bourse et requêtes bancaires peuvent être accomplis.
